# EUROPEAN PATENT SPECIFICATION

(11) **EP 0 736 447 B1**
(45) Date of publication and mention of the grant of the patent: **22.09.1999**
(21) Application number: 96200918.9
(22) Date of filing: 03.04.1996
(51) Int. Cl.: B62K 21/16

(54) **Adjustable coupling**
Einstellbare Verbindungsvorrichtung
Dispositif d'accouplement réglable

(30) Priority: 03.04.1995 NL 1000014
(43) Date of publication of application: 09.10.1996
(73) Proprietor: Van der Veer Designers v.o.f., 4158 CN Deil (NL)
(72) Inventor: Van der Veer, Popke Binne, 4158 CN Deil (NL)
(74) Representative: 't Jong, Bastiaan Jacobus

(56) References cited:
- EP-A- 0 172 979
- FR-E- 54 273
- US-A- 5 133 224
- US-A- 5 181 436

## Description

The present invention relates to a coupling piece for coupling a handlebar and a steering pin of the frame of a bicycle, comprising:
- a body with a first strap connectable to the handlebar and a second strap connectable to a bush extending in a direction substantially parallel to the handlebar and attached to the steering pin; and
- a clamping mechanism comprising an elongate tensioning element extending between said straps and a control member connected to said tensioning element for selective, simultaneous enforcement of said straps around respectively the handlebar and the bush in a desired relative position thereof.

Such a coupling piece is known from French patent FR-A-54.273, where the tensioning element comprises an elongate bolt with a wing nut screwed thereon as the control member to enforce or tighten said straps.

This known coupling piece has for a disadvantage, that it is potentially unsafe and very user-unfriendly. It is potentially dangerous, because the wings of the wing nut form protrusions or extending parts, on which a bicyclist can hurt himself, particularly in the case of a collision. A number of turns of the wing nut are required to enforce or tighten both straps and simultaneously fix the positioning of the handlebar in a desired position relative to the steering pin. While turning the wing nut the preset relative position, which is then held by one hand, will more often than not be lost, so that a user will have to start over again or be satisfied with a less ideal positioning than that, which was intended.

With this invention it is intended to obviate the above stated disadvantages and to this end a coupling piece is provided, which is distinguished in that said control member comprises a lever fixed for rotation to said tensioning element by means of an eccentric, where said lever is reciproquely rotatable from a first straps enforcing position, in which the lever extends along the body, away from the body to a second straps releasing position.

The control member formed as a lever, abuts closely to the body of the coupling piece in the straps tightening or enforcing position thereof, such that the coupling piece does not have any extending parts, on which a user can be hurt, for instance in the case of a collision, thereby increasing safety. With a coupling piece according to the present invention the handlebar can be fixed in a desired position relative to the steering pin with a single action of one hand gripping the control member, while the handlebar is held with the other hand in a desired relative position. As fixing the handlebar in the desired relative position requires only a single hand movement, losing the set positioning of the handlebar is highly unlikely and the coupling piece is very user-friendly.

Further features and advantages of the present invention will be elucidated with reference to the figure description hereinbelow of embodiments of the invention. In the drawing:
fig. 1 shows a partly cut away perspective view of a coupling piece according to the invention;
fig. 2 shows a side view in section of the embodiment of the coupling piece shown in fig. 1;
fig. 3 is a perspective view of a second embodiment of the invention; and
fig. 4 is a partly cut away side view of a third embodiment of the invention;
fig. 5 is a side view in section of a fourth embodiment of the invention;
fig. 6 is a side view in section of a fifth embodiment of the invention; and
fig. 7 shows a sectional view of the section taken in figure 6 along the line VII-VII.

In the figures of the various embodiments of the invention the same components are referred to with the same reference numerals.

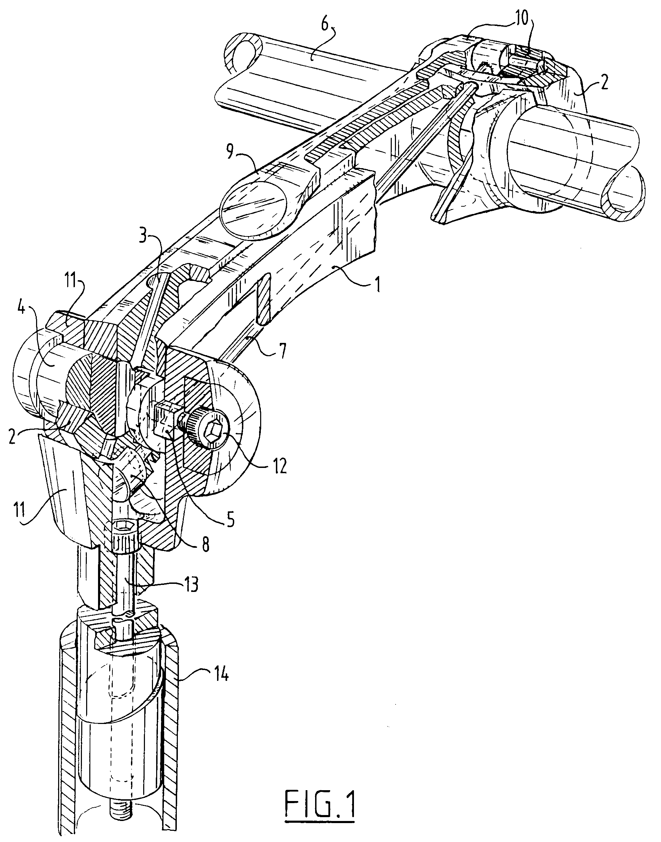

The embodiment of the coupling piece shown in fig. 1 comprises: a body 1; straps 2; and a tensioning mechanism formed by a lever 9, a tensioning rod 7 with a drum 8 on one end thereof, and an eccentric 10.

Placed in the strap 2 shown on the left in the drawing is a bush 4 which is provided with a square protrusion 5. The bush 4 is fixed to a connecting piece 11 by means of a bolt 12 in the square protrusion 5, wherein the square protrusion 5 is placed through a recess of the same shape in connecting piece 11. The bush 4 can hereby not rotate in the connecting piece 11. The connecting piece 11 is fixedly mounted by means of a bolt 13 to a tube 14, which tube 14 forms the top of the front fork of a bicycle. At a certain position of the coupling piece the bolt 13 can be reached with a tool through the hole 3 through the strap 2 shown on the left in the drawing and through the bush 4. A handlebar tube 6 is placed in the other strap 2.

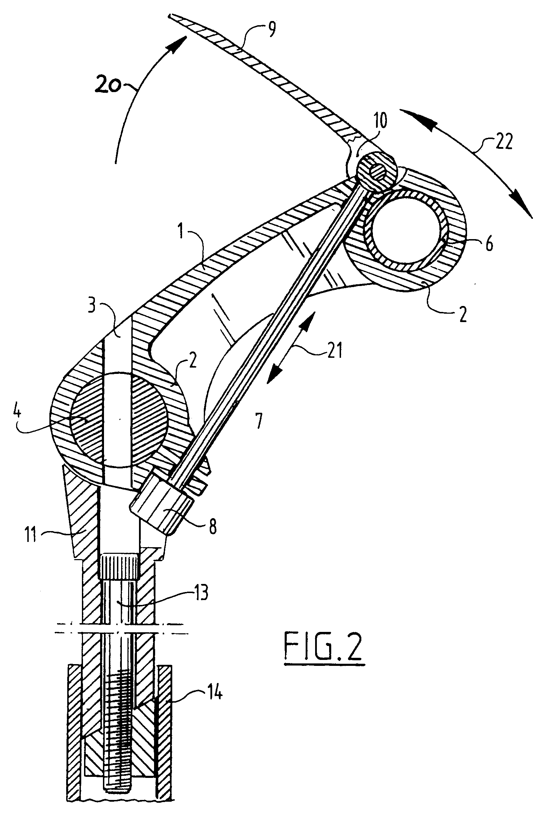

The action of this coupling piece will be further described hereinbelow with reference to fig. 2.

The coupling piece is shown in a position such that the bolt 13 can be reached with a tool in the hole 3 in strap 2 and through bush 4, in order to fix the connecting piece 11 in the front fork 14 of the cycle by means of the bolt 13, or to release the connecting piece 11 therefrom.

The bush 4 is fixedly mounted on connecting piece 11 so that the strap 2 shown on the left-hand side of the coupling piece rotates round bush 4 in the releasing position of the clamping mechanism. Likewise in the releasing position of the clamping mechanism the handlebar tube 6 rotates in the strap shown on the right-hand side in order to determine the desired orientation of the handlebar at a certain position of the coupling piece relative to front fork 14, which position is determined by rotating the coupling piece round the bush 4 in the direction indicated by arrow 22.

The clamping mechanism is brought into a releasing position by moving lever 9 away from the body 1 of the coupling piece in the direction of arrow 20, whereby the tensioning bar 7 no longer clamps the straps 2, since, due to the action of the eccentric 10 along the tensioning bar 7 in the direction of arrow 21, a greater distance is created between eccentric 10 and drum 8 with this movement of the lever 9.

In the releasing position of the clamping mechanism the cyclist can adjust the height and orientation of the handlebar, whereafter the coupling piece can be fixed in the desired position and the handlebar tube 6 in the desired radial orientation by again carrying the lever 9 in the direction of the arrow 20 against the body 1 of the coupling piece, whereby the tensioning bar 7 is tensioned and the straps 2 are clamped fast.

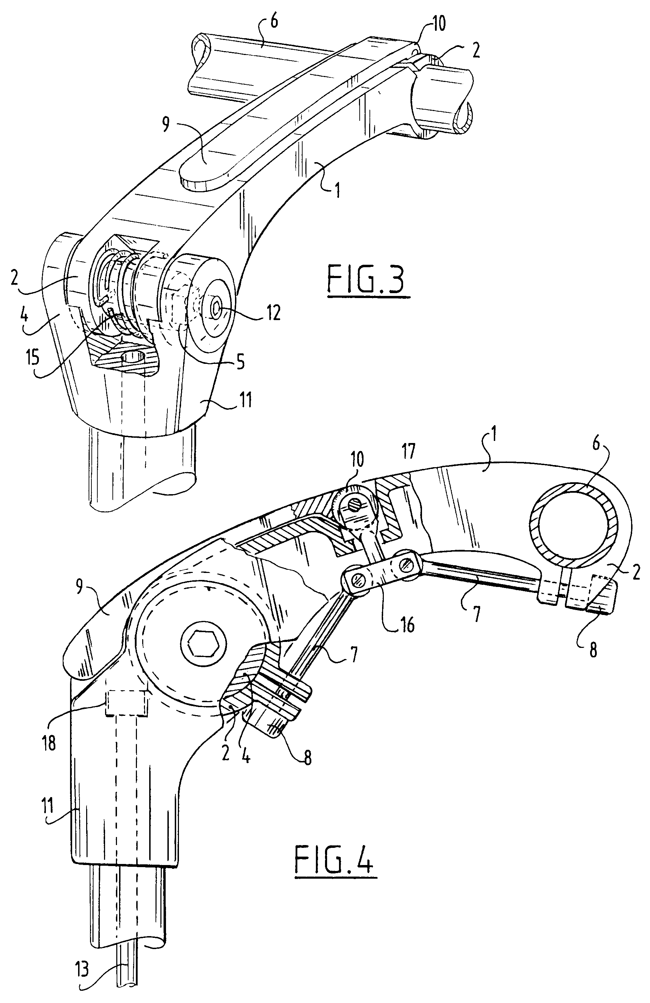

Shown in fig. 3 is a second embodiment of a coupling piece according to the invention wherein round the bush 4 is placed a spring 15, of which one end is fixed to the bush 4 and the other end is fixed to the strap 2 enclosing the bush 4.

This spring 15 ensures that the position of the coupling piece is maintained when the clamping mechanism is brought into a releasing position.

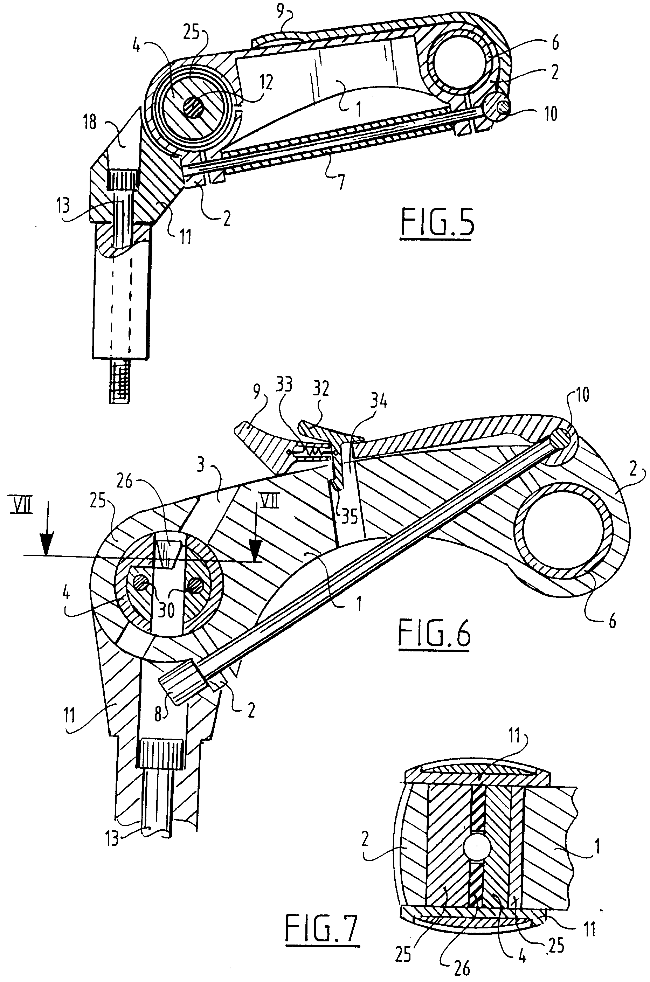

This embodiment shown in fig. 4 differs from the coupling pieces shown in figures 1 to 3 in that the clamping mechanism comprises for each of the two straps 2 a separate tensioning bar 7 and a drum 8 fixed thereto. The tensioning bars 7 are both coupled to a fixing plate 16, which fixing plate 16 is coupled by means of a pull rod 17 placed through the body 1 of the coupling piece to an eccentric 10, wherein eccentric 10 can again be operated by means of a lever 9.

Both tensioning bars 7 are situated under the body 1 of the coupling piece, whereby a space is free on the right-hand side of the coupling piece where for instance a map holder or a cycle computer can be attached to the coupling piece.

In this figure the connecting piece 11 further has a different structure wherein the bush 4, and therefore the strap 2 of the coupling piece, is placed adjacent to a hole 18 in the connecting piece 11, wherein the bolt 13 in hole 18 can be reached with a tool irrespective of the position of the coupling piece. A continuous hole through the strap 2 of the coupling piece and through the bush 4 is not therefore necessary for operation of bolt 13, which enhances convenience of operation and the strength of strap 2.

Fig. 5 shows an embodiment of the coupling piece, wherein one tensioning bar 7 engages both straps 2 and is situated in the figure wholly under the body 1 of the coupling piece. The lever 9 is herein connected to the eccentric 10 by being bent round the strap 2 shown on the right of the figure, so that in the coupled situation lever 9 is placed against the upper side of the body 1 of the coupling piece.

Around the bush 4 is also arranged a sleeve 25 of resilient material such as rubber, whereby shocks are damped, for instance in the case that the coupling piece serves to fix handlebar or saddle to respectively the front fork or saddle pillar of a cycle and the cycle passes over a bump in the road surface. This therefore involves a damping, wherein the coupling piece is situated in the coupled situation.

Fig. 6 shows another embodiment of the coupling piece according to the present invention. The bush 4 is herein fixed to the coupling piece 11 by means of two pins 30 so that bush 4 cannot rotate in connecting piece 11.

In the drawing the bush 4 is provided in the top part thereof with a recess in which is placed a resilient resistance element 26, also made for instance of rubber, which is also shown in fig. 7. The sleeve 25 connects onto the resistance element 26, wherein in the case there occurs a shock to be damped by sleeve 25 the resistance element 26 prevents excessive deformation of sleeve 25 and therefore also contributes to the damping realized in this manner.

In this fig. 6 are also shown locking means which serve to prevent undesired release of the coupling piece. The locking means are formed by a locking device 32, a spring 33, a recess 34 in the body 1 of the coupling piece, and a shoulder 35 in this recess 34.

The locking device 32 engages on the body 1 of the coupling piece round the shoulder 35 in the recess 34 in the body 1 of the coupling piece. Locking device 32 is herein held in locked state using the spring 33. Unlocking can be realized by pressing on locking device 32 whereby the latter no longer engages on shoulder 35 in recess 34. The lever 9 can here be moved upward in order to bring about release of the coupling piece. When the lever 9 is operated to return the coupling piece to the coupled state, locking device 32 automatically re-engages shoulder 35 in recess 34 under the influence of spring 33, wherein no additional action is required for this purpose. The lever 9 cannot therefore be placed in a released state of the coupling piece when for instance a sleeve of a jacket or the like of a cyclist becomes caught on the lever.

In another embodiment of the invention (not shown) a drum 8 is embodied as a nut, which is screwed over a threaded end on the outer end of a tensioning bar 7 at a strap 2, so that the clamping mechanism is adjustable and deformations of a strap 2, a tensioning bar 7, drum 8, bush 4 or handlebar tube 6 occurring in the long term can be compensated.

## Claims

1. Coupling piece for coupling a handlebar (6) and a steering pin (14) of the frame of a bicycle, comprising:
- a body (1) with a first strap (2) connectable to the handlebar (6) and a second strap connectable to a bush (4) extending in a direction substantially parallel to the handlebar (6) and attached to the steering pin (14); and
- a clamping mechanism comprising an elongate tensioning element (7) extending between said straps (2) and a control member connected to said tensioning element (7) for selective, simultaneous enforcement of said straps (2) around respectively the handlebar (6) and the bush (4) in a desired relative position thereof,
**characterized** in that said control member comprises a lever (9) fixed for rotation to said tensioning element (7) by means of an eccentric (10), where said lever (9) is reciprocally rotatable from a first straps enforcing position, in which the lever (9) extends along the body (1), away from the body (1) to a second straps releasing position.

2. Coupling piece as claimed in claim 1, **characterized by** locking means (32-35) for locking the lever in the coupled state.

3. Coupling piece as claimed in claims 1 or 2, **characterized by** the or each tensioning element (7) is elongate and adjustable in the tensioning direction.

4. Coupling piece as claimed in any of the claims 1-3, **characterized by** the or each tensioning element (7) is adjustable by means of a nut (8) co-acting with a portion of the tensioning element (7) formed by a threaded end.

5. Coupling piece as claimed in any of the claims 1-4 **characterized in that** at least one tensioning element (7) is arranged through the body (1) of the coupling piece.

6. Coupling piece as claimed in one or more of the foregoing claims, **characterized in that** the coupling piece further comprises a spring (15) for holding at least one of the bush (4) and the handlebar (6) in a rest position relative to the body (1), wherein one end of the spring is fixed to said one of the bush (4) and the handlebar (6), the spring is arranged therearound and the other end of the spring (15) is fixed to the body (1).

7. Coupling piece as claimed in any of the foregoing claims, **characterized in that** a resilient member is placed between at least one of the bush (4) and the handlebar (6), and the associated strap.

8. Coupling piece as claimed in one or more of the foregoing claims, **characterized in that** a front fork (14) of a bicycle is fixable perpendicularly to the bush (4) by means of a connecting piece (11).

9. Bicycle, comprising a handlebar and a steering pin connected to a steerable wheel of said bicycle, **characterized** by a coupling piece coupling said steering pin and said handlebar according to one or more of the previous claims.

## Patentansprüche

1. Verbindungsstück zum Verbinden einer Lenkstange (6) und einer Lenksäule (14) des Rahmens eines Fahrrades, mit:
- einem Körper (1) mit einer ersten Schelle (2), die mit der Lenkstange (6) verbindbar ist, und einer zweiten Schelle, die mit einer Hülse (4) verbindbar ist, welche sich in einer Richtung im wesentlichen parallel zur Lenkstange (6) erstreckt und an der Lenksäule befestigt ist; und
- einem Klemmechanismus mit einem länglichen Spannelement (7), das sich zwischen den Schellen (2) erstreckt, und einem mit dem Spannelement (7) verbundenen Steuerelement zur selektiven, simultanen Klemmung der Schellen (2) um die Lenkstange (6) bzw. um die Hülse (4) einer gewünschten Relativposition,
dadurch **gekennzeichnet,** daß das Steuerelement einen Hebel (9) aufweist, der mittels eines Exzenters (10) drehbar an dem Spannelement (7) befestigt ist, wobei der Hebel (9) aus einer ersten Schellenklemmposition, in der sich der Hebel (90) am Körper (1) entlang erstreckt, vom Körper (1) weg in eine zweite Schellenlöseposition, und umgekehrt, bewegbar ist.

2. Verbindungsstück nach Anspruch 1,
**gekennzeichnet** durch eine Sperreinrichtung (32 bis 35) zum Sperren des Hebels in dem gekuppelten Zustand.

3. Verbindungsstück nach Anspruch 1 oder 2,
dadurch **gekennzeichnet,** daß das oder jedes Spannelement (7) länglich und in Spannrichtung einstellbar ist.

4. Verbindungsstück nach einem der Ansprüche 1 bis 3,
dadurch **gekennzeichnet,** daß das oder jedes Spannelement (7) mittels einer Mutter (8) einstellbar ist, die mit einem Teil des Spannelementes (7), der durch ein Gewindeende gebildet ist, zusammenwirkt.

5. Verbindungsstück nach einem der Ansprüche 1 bis 4,
dadurch **gekennzeichnet,** daß wenigstens ein Spannelement (7) durch den Körper (1) des Verbindungsstückes hindurchgehend, angeordnet ist.

6. Verbindungsstück nach einem oder mehreren der vorstehenden Ansprüche,
dadurch **gekennzeichnet,** daß das Verbindungsstück weiterhin eine Feder (15) aufweist, um die Hülse (4) und/oder Lenkstange (6) in einer Ruheposition relativ zum Körper (1) zu halten, wobei ein Ende der Feder an der Hülse (4) oder der Lenkstange (6) befestigt ist, wobei die Feder um diese herum angeordnet und das andere Ende der Feder (15) am Körper (1) befestigt ist.

7. Verbindungsstück nach einem der vorstehenden Ansprüche,
dadurch **gekennzeichnet,** daß zwischen der Hülse (4) und/oder Lenkstange (6) und der zugehörigen Schelle ein federndes Element angeordnet ist.

8. Verbindungsstück nach einem oder mehreren der vorstehenden Ansprüche,
dadurch **gekennzeichnet,** daß eine Vordergabel (14) eines Fahrrades mittels eines Anschlußstückes (11) rechtwinklig zur Hülse an dieser befestigbar ist.

9. Fahrrad mit einer Lenkstange und einer Lenksäule, die mit einem lenkbaren Rad eines Fahrrades verbunden ist,
**gekennzeichnet** durch ein Verbindungsstück gemäß einem oder mehreren der vorstehenden Ansprüche, welches die Lenksäule und die Lenkstange miteinander verbindet.

## Revendications

1. Ensemble de raccord pour raccorder un guidon (6) et une broche de direction (14) du cadre d'une bicyclette, comprenant :
- un corps (1) muni d'une première chape (2) adaptée pour être reliée au guidon (6) et une seconde chape adaptée pour être reliée à une douille (4) s'étendant dans une direction approximativement parallèle au guidon (6) et solidarisée à la broche de direction (14); et
- un mécanisme de pincement comprenant un élément tendeur (7) allongé s'étendant entre lesdites chapes (2) et un organe de commande relié audit élément tendeur (7) pour le serrage simultané et sélectif desdites chapes (2) autour respectivement du guidon (6) et de la douille (4) dans une position relative désirée,
caractérisé en ce que ledit organe de commande comprend un levier (9) fixé à rotation audit élément tendeur (7) au moyen d'un excentrique (10), où ledit levier (9) est adapté pour être tourné dans un sens et dans l'autre, depuis une première position de serrage des chapes, dans laquelle le levier (9) s'étend le long du corps (1), en s'éloignant du corps (1) vers une deuxième position de relâchement des chapes.

2. Ensemble de raccord selon la revendication 1, caractérisé par des moyens de verrouillage (32, 35) pour verrouiller le levier à l'état raccordé.

3. Ensemble de raccord selon la revendication 1 ou la revendication 2, caractérisé par le fait que l'élément ou chaque élément tendeur (7) est allongé et ajustable dans la direction de tension.

4. Ensemble de raccord selon l'une quelconque des revendications 1 à 3, caractérisé en ce que l'élément ou chaque élément tendeur (7) est ajustable au moyen d'un écrou (8) coopérant avec une partie de l'élément tendeur (7) formée par une extrémité filetée.

5. Ensemble de raccord selon l'une quelconque des revendications 1 à 4, caractérisé en ce qu'au moins un élément tendeur (7) est disposé à travers le corps (1) de l'ensemble de raccord.

6. Ensemble de raccord selon au moins l'une des revendications précédentes, caractérisé en ce qu'il comprend en outre un ressort (15) pour maintenir au moins l'un parmi la douille (4) et le guidon (6) dans une position d'appui par rapport au corps (1), où une extrémité du ressort est fixée audit un parmi la douille (4) et le guidon (6), le ressort est disposé autour, et l'autre extrémité du ressort (15) est fixée au corps (1).

7. Ensemble de raccord selon l'une quelconque des revendications précédentes, caractérisé en ce qu'un organe élastique est placé entre au moins l'un parmi la douille (4) et le guidon (6), et la chape associée.

8. Ensemble de raccord selon au moins l'une des revendications précédentes, caractérisé en ce qu'une fourche avant (14) de bicyclette est apte à être fixée perpendiculairement à la douille (4) au moyen d'une pièce de liaison (11).

9. Bicyclette, comprenant un guidon et une broche de direction connectée à une roue directrice de ladite bicyclette, caractérisée par un ensemble de raccord raccordant ladite broche de direction et ledit guidon selon au moins l'une des revendications précédentes.
